# EUROPÄISCHE PATENTSCHRIFT

(11) **EP 4 179 867 B1**
(45) Veröffentlichungstag und Bekanntmachung des Hinweises auf die Patenterteilung: **07.10.2026**
(21) Anmeldenummer: 22190473.3
(22) Anmeldetag: 16.08.2022
(51) Int. Cl.: A01D 41/127, A01F 12/46, G01N 21/85

(54) **MÄHDRESCHER MIT EINER BYPASS-VORRICHTUNG**
COMBINE HARVESTER WITH A BYPASS DEVICE
MOISSONNEUSE-BATTEUSE AVEC UN DISPOSITIF DE DÉRIVATION

(30) Priorität: 11.11.2021 DE 102021129368
(43) Veröffentlichungstag der Anmeldung: 17.05.2023
(73) Patentinhaber: CLAAS Selbstfahrende Erntemaschinen GmbH, 33428 Harsewinkel (DE)
(72) Erfinder: FISCHER, Frédéric, 59759 Arnsberg (DE); LÜTKE HARMANN, Tim, 48324 Sendenhorst (DE); BORMANN, Bastian, 33334 Gütersloh (DE); WITTE, Johann, 58730 Fröndenberg (DE); BRANDMEIER, Jonas, 33428 Harsewinkel (DE); GEARY, Richard, Marlborough, SN8 2JU (GB)
(74) Vertreter: CLAAS Gruppe

(56) Entgegenhaltungen:
- EP-B1- 2 036 424
- US-A1- 2009 291 723
- US-A1- 2011 151 952
- US-A1- 2017 112 057

## Beschreibung

Die vorliegende Erfindung betrifft einen selbstfahrenden Mähdrescher und ein Verfahren zum Steuern dieses Mähdreschers.

Selbstfahrende Mähdrescher weisen typischerweise einen Kornelevator zur Förderung eines Erntegutstroms von einer Förder- und Reinigungsvorrichtung des Mähdreschers zu einem Korntank des Mähdreschers auf. In der EP 0 908 086 A1 ist beispielsweise eine am Kornelevator angeordnete Bypass-Vorrichtung offenbart, durch die ein Erntegut-Teilstrom des durch den Kornelevator geführten Erntegutstroms geführt wird, wobei die Bypass-Vorrichtung einen Feuchtigkeitssensor zur Feuchtemessung aufweist. Ein weiterer selbstfahrender Mähdrescher mit einer optischen Messvorrichtung zur Evaluierung des Ernteguts wird durch die US 2011/151952 A1 offenbart.

Der vorliegenden Erfindung liegt die Aufgabe zugrunde, eine verbesserte oder zumindest eine alternative Ausführungsform eines selbstfahrenden Mähdreschers mit einer Bypass-Vorrichtung anzugeben.

Diese Aufgabe wird erfindungsgemäß durch die Gegenstände der unabhängigen Ansprüche gelöst. Vorteilhafte Ausführungsformen sind Gegenstand der abhängigen Ansprüche.

Der erfindungsgemäße selbstfahrende Mähdrescher zur Aufnahme und Behandlung von Erntegut umfasst einen Kornelevator zur Förderung eines Erntegutstroms von einer Förder- und Reinigungsvorrichtung des Mähdreschers zu einem Korntank des Mähdreschers. Hierbei ist am Kornelevator eine Bypass-Vorrichtung derart angeordnet, dass ein Erntegut-Teilstrom des durch den Kornelevator geführten Erntegutstroms in die Bypass-Vorrichtung einströmt. Die Bypass-Vorrichtung ist zur Führung eines Erntegut-Teilstroms ausgebildet. Der Erntegut-Teilstrom kann vom Kornelevator in die Bypass-Vorrichtung einströmen und anschließend durchströmen, wobei der Erntegut-Teilstrom nach dem Durchströmen der Bypass-Vorrichtung wieder zurück in den Kornelevator strömt.

Die vorliegende Erfindung beruht auf dem allgemeinen Gedanken, dass die Bypass-Vorrichtung eine optische Messvorrichtung zur Ermittlung von Ernteguteigenschaften, insbesondere zur Ermittlung von Inhaltsstoffen, eines Erntegut-Teilstromes aufweist. Die optische Messvorrichtung kann zur Ermittlung von Inhaltsstoffen des Erntegut-Teilstromes ausgebildet sein.

Mit der optischen Messvorrichtung können beispielsweise die Wassermasse, die Proteinmasse, die Kohlenhydratmasse und/oder die Fettmasse und/oder die Ölmasse des Erntegut- Teilstromes ermittelt werden. Hierfür kann die Messvorrichtung eine Lichtquelle aufweisen, die den Erntegut-Teilstrom beim Durchströmen der Messvorrichtung belichtet.

Ferner kann die Messvorrichtung mittels eines Sensors, insbesondere eines Nahinfrarotsensors und/oder eines Siliziumdetektors, massenproportionale Absorptionsspektren erfassen und anhand dieser Messdaten die Wassermasse, die Proteinmasse, die Kohlenhydratmasse und/oder die Fettmasse und/oder die Ölmasse des Erntegut-Teilstromes ermitteln. Hierdurch kann die Inhaltsstoffzusammensetzung und/oder Eigenschaften des durch den Kornelevator geführten Erntegutstroms anhand der massenproportionale Absorptionsspektren des Erntegut-Teilstroms ermittelt werden.

Die Bypass-Vorrichtung weist einen Schneckenförderer zur Förderung des Erntegut-Teilstroms zur optischen Messvorrichtung auf. Die Bypass-Vorrichtung kann eine Zuführungsöffnung aufweisen, durch die der Erntegut-Teilstrom ausgehend von dem Kornelevator in die Bypass-Vorrichtung einströmt. Hierbei kann der Erntegut-Teilstrom in den Schneckenförderer einströmen. Hierfür kann eine Zuführungsöffnung oberhalb eines Teiles des Schneckenförderers angeordnet sein, sodass der Erntegut-Teilstrom aufgrund der Gravitation im Wesentlichen entlang der Schwerkraftrichtung strömt und über eine Einströmungsöffnung in den Schneckenförderer einströmt.

Der Schneckenförderer fördert den eingeströmten Erntegut-Teilstrom zur optischen Messvorrichtung. Hierbei kann der Schneckenförderer derart ausgebildet und/oder derart in der Bypass-Vorrichtung ausgerichtet sein, dass der durch die durch den Schneckenförderer geförderte Erntegut-Teilstrom über eine Ausströmungsöffnung verlässt und in Richtung der optischen Messvorrichtung strömt. Hierbei kann es vorgesehen sein, dass die Einströmungsöffnung bezüglich der Schwerkraftrichtung unterhalb der Ausströmungsöffnung angeordnet ist. Mit anderen Worten ausgedrückt, wird der im Schneckenförderer Erntegut-Teilstrom hochgefördert. Durch den Schneckenförderer kann eine kontinuierliche und gleichmäßige Zuführung des Erntegut-Teilstroms zur optischen Messvorrichtung gesichert werden, sodass die optische Messvorrichtung optimale Messungen ausführen kann. Die Förderung des eingeströmten Erntegut-Teilstroms innerhalb des Schneckenförderers kann entlang einer Hauptförderrichtung erfolgen.

Der Schneckenförderer kann eine Zwischenöffnung aufweisen, die bezüglich der Hauptförderrichtung stromab der Ausströmungsöffnung ausgebildet ist, wobei über diese Zwischenöffnung ein Teil des Erntegut-Teilstroms, der nicht in die Ausströmungsöffnung eingeströmt ist, zurück in den Kornelevator strömen kann.

Der Schneckenförderer kann einen Antrieb, insbesondere einen hydraulischen und/oder elektrischen und/oder mechanischen Antrieb, aufweisen.

Die Bypass-Vorrichtung weist ein Zuführrohr zur Führung des Erntegut-Teilstroms vom Schneckenförderer zur optischen Messvorrichtung auf, wobei die optische Messvorrichtung ein Rohr, insbesondere ein transparentes Rohr und/oder ein optisch transparentes Rohr, zur Führung des Teilstroms des Erntegutstroms für die Ermittlung von Ernteguteigenschaften des Erntegut-Teilstromes aufweist. Das Rohr kann ein Glasrohr, insbesondere ein transparentes Glasrohr und/oder ein optisch transparentes Glasrohr, und/oder ein Holzrohr, insbesondere transparentes Holzrohr und/oder ein optisch transparentes Holzrohr, sein. Glas kann ein nichtkristalliner, insbesondere ein transparenter amorpher Feststoff, sein. Das Zuführrohr kann separat bezüglich des Schneckenförderers und/oder separat bezüglich der optischen Messvorrichtung ausgebildet sein. Das Zuführrohr kann strömungstechnisch derart zwischen dem Schneckenförderer und der optischen Messvorrichtung angeordnet sein, dass der Erntegut-Teilstrom vom Schneckenförderer in das Zuführrohr einströmt, das Zuführrohr durchströmt und anschließend in die optische Messvorrichtung einströmt. Der Bereich des Schneckenförderers, aus dem der Erntegut-Teilstrom austritt, kann oberhalb des Zuführrohrs angeordnet sein, sodass der Erntegut-Teilstrom neben der Geschwindigkeit des Schneckenförderers zusätzlich durch die Gravitation im Wesentlichen entlang der Schwerkraftrichtung strömt.

Das Rohr der optischen Messvorrichtung kann im Wesentlichen transparent für die Lichtstrahlung der Lichtquelle der optischen Messvorrichtung und/oder im Wesentlichen transparent für die Strahlung sein, die von dem Sensor der optischen Messvorrichtung erfasst und/oder gemessen wird.

Die Bypass-Vorrichtung ist zur Reinigung des Rohres der optischen Messvorrichtung und zur Sicherstellung eines Leerzustandes des Rohres der optischen Messvorrichtung ausgebildet.

Es kann vorgesehen sein, dass die Bypass-Vorrichtung vor der Sicherstellung des Leerzustandes des Rohres eine Reinigung des Rohres durchführt.

Die optische Messvorrichtung kann derart ausgebildet sein, dass sie erkennen und/oder ermitteln, insbesondere sensorisch erkennen und/oder ermitteln, kann, dass eine Reinigung oder Referenzierung der optischen Messvorrichtung erforderlich ist. Hierfür kann der Sensor der optischen Messvorrichtung zwei unterschiedliche Referenzen eigenständig ermitteln, ohne dass Weißnormales in die optische Messvorrichtung eingebracht wird. Diese zwei unterschiedlichen Referenzen sind eine "Dunkelreferenz" und eine "Weißreferenz". Bei der "Dunkelreferenz" ist die Lichtquelle der optischen Messvorrichtung ausgeschaltet und es ist kein Erntegut in der optischen Messvorrichtung. Bei der "Weißreferenz" ist die Lichtquelle der optischen Messvorrichtung eingeschaltet und es ist kein Erntegut in der optischen Messvorrichtung. Basierend auf diesen zwei Referenzen kann eine durch Alterung hervorgerufene veränderte Charakteristik der Lichtquelle eliminiert bzw. herausberechnet werden, oder auch ein leichtes Verschmutzen eines Glaskolbens in der optischen Messvorrichtung kann eliminiert bzw. herausberechnet werden. Daher kann die optische Messvorrichtung bei einer Alterung der Lichtquelle und/oder einer leichten Verschmutzung des Glaskolbens weiterhin mit ausreichender Sicherheit eingesetzt und/oder genutzt werden. Für eine solche Referenzierung der optischen Messvorrichtung sichert die Bypass-Vorrichtung den Leerzustand des Rohres. Für eine ausreichende, insbesondere gute, Referenzierung kann in regelmäßigen Abständen eine Referenzmessung ausgeführt werden.

Ferner kann es in bestimmten Erntebedingungen erforderlich sein, das Rohr zu reinigen.

Dies erfolgt mit einem Zylinder, dessen Kolbenstange durch das Rohr geschoben wird. Hierfür kann an der Kolbenstange ein Reinigungselement angeordnet sein. Insbesondere kann am Ende der Kolbenstange das Reinigungselement angeordnet sein. Beispielsweise kann das Reinigungselement als bürstenartiger Aufsatz ausgebildet sein. Ein bürstenartiger Aufsatz kann gemäß einem Besen und/oder einer Drahtbürste und/oder einem "Pfeiffenputzer" ausgebildet sein.

Die optische Messvorrichtung kann derart ausgebildet sein, dass sie erkennt, dass eine Blockade des Rohres besteht, die nicht von der optischen Messvorrichtung entfernt werden kann, sondern manuell entfernt werden muss. In einem solchen Fall kann die optische Messvorrichtung beispielsweise den Bediener des Mähdreschers bezüglich der Blockade informieren und/oder den Bediener des Mähdreschers dazu auffordern, die Blockade des Rohres manuell zu entfernen.

Um den Leerzustand des Rohres zu sichern, kann der Schneckenförderer ein Rückwärtsdrehen seiner Schnecke, insbesondere für einen kurzen Zeitraum, vollziehen, um den Einlauf des Erntegut-Teilstroms in das Rohr zu blockieren.

Um den Leerzustand des Rohres zu sichern, kann die Bypass-Vorrichtung einen ersten Zylinder mit einer beweglichen Kolbenstange und zur Reinigung des Rohres einen zweiten Zylinder mit einer beweglichen Kolbenstange aufweisen, wobei der erste Zylinder separat bezüglich des zweiten Zylinders ausgebildet sein kann.

Die Bypass-Vorrichtung kann einen zusätzlichen Probeneinlass und einen zusätzlichen Probenauslass aufweisen, um eine Getreideprobe zu vermessen, die nicht mit dem Mähdrescher geerntet wurde. Hierbei kann es vorgesehen sein, dass die Bypass-Vorrichtung den Leerzustand des Rohres der optischen Messvorrichtung sicherstellt, sodass kein vom Mähdrescher geerntetes Erntegut-Teilstrom in das Rohr einströmen kann, jedoch die Getreideprobe über den zusätzlichen Probeneinlass in das Rohr eingeführt werden kann. Es kann vorgesehen sein, dass die Bypass-Vorrichtung vor der Sicherstellung des Leerzustandes des Rohres eine Reinigung des Rohres durchgeführt. Hierfür kann der zusätzliche Probeneinlass oberhalb des Rohres der optischen Messvorrichtung angeordnet sein, sodass die Getreideprobe aufgrund der Gravitation im Wesentlichen entlang der Schwerkraftrichtung strömt und das Rohr durchströmt. Anschließend kann die Getreideprobe über den zusätzlichen Probenauslass aus der optischen Messvorrichtung ausströmen, wobei der zusätzliche Probenauslass unterhalb des Rohres der optischen Messvorrichtung angeordnet ist, sodass die Getreideprobe aufgrund der Gravitation im Wesentlichen entlang der Schwerkraftrichtung strömt und das Rohr verlässt. Da hierbei keine aktive Gutförderung erforderlich ist, ist es beispielsweise nicht nötig, dass der Antrieb und/oder der Schneckenförderer des Mähdreschers aktiv ist. Dieses System kann dazu genutzt werden, eine Probe bzw. Getreideprobe mit bekannten Inhaltsstoffen zu vermessen, um so eine Offsetkorrektur des Sensors der optischen Messvorrichtung durchzuführen.

Durch eine Bypass-Vorrichtung, die zur Reinigung des Rohres der optischen Messvorrichtung und zur Sicherstellung eines Leerzustandes des Rohres der optischen Messvorrichtung ausgebildet ist, lässt sich die Einsatzzeit der optischen Messvorrichtung maximieren, sodass beispielsweise Wartungskosten und/oder Ersatzteilkosten reduziert werden können.

Bei einer vorteilhaften Weiterbildung der erfindungsgemäßen Lösung ist vorgesehen, dass die Bypass-Vorrichtung eine Zylindervorrichtung mit einer beweglichen Kolbenstange zur Reinigung des Rohres der optischen Messvorrichtung und zur Sicherstellung eines Leerzustandes des Rohres der optischen Messvorrichtung aufweist. Mit anderen Worten ausgedrückt, weist die Bypass-Vorrichtung lediglich bzw. genau eine Zylindervorrichtung, die zur Reinigung des Rohres und zur Sicherstellung eines Leerzustandes des Rohres ausgebildet ist. Die Bypass-Vorrichtung, insbesondere die Anordnung und/oder Ausrichtung der optischen Messvorrichtung, insbesondere des Rohres, und des Schneckenförderers und der einen Zylindervorrichtung, kann derart ausgebildet sein, dass die eine Zylindervorrichtung zur Reinigung des Rohres der optischen Messvorrichtung und zur Sicherstellung eines Leerzustandes des Rohres der optischen Messvorrichtung ausgebildet ist. Hierbei versteht es sich von selbst, dass eine Reinigung des Rohres der optischen Messvorrichtung und die Sicherstellung eines Leerzustandes des Rohres nicht zeitgleich erfolgt, sondern beispielsweise erst eine Reinigung des Rohres und anschließend eine Sicherstellung eines Leerzustandes des Rohres erfolgt. Es kann auch vorgesehen sein, dass die eine Zylindervorrichtung lediglich eine Sicherstellung eines Leerzustandes des Rohres oder lediglich eine Reinigung des Rohres durchführt.

Da lediglich eine Zylindervorrichtung und keine weitere erforderlich ist, können die Herstellungskosten des Bypass-Vorrichtung gesenkt, der erforderliche Einbauraum für die Bypass-Vorrichtung reduziert und zusätzlich das Gesamtgewicht der Bypass-Vorrichtung optimiert werden.

Bei einer vorteilhaften Weiterbildung der erfindungsgemäßen Lösung ist vorgesehen, dass die Kolbenstange, insbesondere eine Stirnfläche der Kolbenstange, wenigstens eine Öffnungsposition einnehmen kann, in der der Schneckenförderer, das Zuführrohr und das Rohr derart zur Führung des Erntegut-Teilstroms miteinander verbunden sind, dass ein vom Schneckenförderer geförderter Erntegut-Teilstrom im Wesentlichen in das Zuführrohr einströmt und anschließend das Rohr durchströmt. Mit anderen Worten ausgedrückt, kann die Kolbenstange eine oder mehrere Öffnungspositionen einnehmen, in denen die Strömung des Erntegut-Teilstroms nicht durch die Kolbenstange beeinflusst bzw. geschwächt wird. In einem solchen Fall ist die Kolbenstange außerhalb eines Strömungsweges, der vom Schneckenförderer zum Zuführrohr führt, angeordnet.

Alternativ oder zusätzlich ist vorgesehen, dass die Kolbenstange, insbesondere die Stirnfläche der Kolbenstange, wenigstens eine Zwischenposition einnehmen kann, in der wenigstens ein Teil der Kolbenstange unterdrückt, dass der Erntegut-Teilstrom von dem Schneckenförderer zum Rohr strömen kann, sodass ein vom Schneckenförderer ausgehender Erntegut-Teilstrom nicht in das Rohr der optischen Messvorrichtung einströmt. Mit anderen Worten ausgedrückt, kann die Kolbenstange eine oder mehrere Zwischenpositionen einnehmen, in denen der Erntegut-Teilstrom ausgehend von dem Schneckenförderer nicht in das Rohr der optischen Messvorrichtung einströmen kann. Daher dichtet die Kolbenstange, insbesondere ein Reinigungselement, das Rohr gegenüber dem Schneckenförderer ab. Die Zwischenposition der Kolbenstange, insbesondere der Stirnfläche der Kolbenstange, kann eine Position innerhalb des Zuführrohrs sein.

Hierbei kann es vorgesehen sein, dass die Kolbenstange wenigstens teilweise den Schneckenförderer durchsetzt, sodass bei einer solchen Ausgestaltung der Schneckenförderer die Förderung stoppt und die beispielsweise die Lage der Schneckenwindungen derart ausgerichtet ist, dass die Kolbenstange reibungsfrei zwischen den Schneckenwindungen des Schneckenförderers bewegt werden kann.

Hierbei kann es vorgesehen sein, dass die Kolbenstange nicht den Schneckenförderer durchsetzt, sodass bei jeder Zwischenposition der Kolbenstange der Schneckenförderer weiter fördern kann, wobei jedoch der Erntegut-Teilstrom nicht in das Rohr einströmen kann. In diesem Fall kann der Erntegut-Teilstrom beispielsweise über die Zwischenöffnung zurück in den Kornelevator strömen. Jedoch kann auch in diesem Fall vorgesehen sein, dass der Schneckenförderer die Förderung stoppt, obwohl die Kolbenstange den grundlegenden Betrieb des Schneckenförderers nicht negativ beeinflusst.

Alternativ oder zusätzlich ist vorgesehen, dass die Kolbenstange, insbesondere die Stirnfläche der Kolbenstange, wenigstens eine Endposition einnehmen kann, in der wenigstens ein Teil der Kolbenstange in einer Endöffnung des Rohres der optischen Messvorrichtung angeordnet ist. Hierdurch kann eine Reinigung und/oder Entleerung des Rohres ausgeführt werden. Die Endöffnung des Rohres kann die Öffnung des Rohres sein, aus der der Erntegut-Teilstrom ausströmt.

Bei einer vorteilhaften Weiterbildung der erfindungsgemäßen Lösung ist vorgesehen, dass die Kolbenstange ein Reinigungselement, insbesondere ein bürstenartiges Reinigungselement, aufweist. Insbesondere kann am Ende der Kolbenstange das Reinigungselement angeordnet sein. Beispielsweise kann das Reinigungselement als bürstenartiger Aufsatz ausgebildet sein. Ein bürstenartiger Aufsatz kann gemäß einem Besen und/oder einer Drahtbürste und/oder einem "Pfeiffenputzer" und/oder einem Schwamm ausgebildet sein. Das Reinigungselement kann ausgehend von der Stirnfläche der Kolbenstange ausgebildet sein. Mit einem Reinigungselement kann eine Reinigung des Rohrs optimal erfolgen, sodass die Lebensdauer der optischen Messvorrichtung erhöht wird und/oder die Messgenauigkeit optimiert wird.

Bei einer vorteilhaften Weiterbildung der erfindungsgemäßen Lösung ist vorgesehen, dass die Bypass-Vorrichtung eine Wegmessvorrichtung zur Ermittlung der Position der Kolbenstange, insbesondere der Stirnfläche und/oder des Reinigungselementes, aufweist, um eine genaue Positionierung der Kolbenstange, insbesondere der Stirnfläche und/oder des Reinigungselementes, zu ermöglichen. Insbesondere wird die Wegmessvorrichtung eingesetzt, um die Kolbenstange, insbesondere die Stirnfläche und/oder das Reinigungselement, gezielt in eine Zwischenposition zu führen, sodass vom Schneckenförderer geförderter Erntegut-Teilstrom nicht in das Rohr der optischen Messvorrichtung einströmt.

Alternativ oder zusätzlich ist vorgesehen, dass die Bypass-Vorrichtung eine Vorrichtung zur zeitgesteuerten Positionsänderung der Kolbenstange, insbesondere der Stirnfläche und/oder des Reinigungselements, aufweist, um eine genaue Positionierung der Kolbenstange, insbesondere der Stirnfläche und/oder des Reinigungselements, zu ermöglichen. Insbesondere wird die zeitgesteuerte Positionsänderung eingesetzt, um die Kolbenstange, insbesondere die Stirnfläche und/oder das Reinigungselements, gezielt in eine Zwischenposition zu führen, sodass vom Schneckenförderer geförderter Erntegut-Teilstrom nicht in das Rohr der optischen Messvorrichtung einströmt.

Alternativ oder zusätzlich ist vorgesehen, dass die Bypass-Vorrichtung im Zuführrohr einen Sensor und/oder einen Schalter zur Erfassung des Vorhandenseins der Kolbenstange, insbesondere der Stirnfläche und/oder des Reinigungselementes, aufweist, um eine genaue Positionierung der Kolbenstange, insbesondere der Stirnfläche und/oder des Reinigungselementes, zu ermöglichen. Der Sensor und/oder der Schalter können im Zuführrohr positioniert sein. Der Schalter kann ein Näherungsschalter sein. Der Sensor kann ein Induktivitätssensor sein. Beispielsweise kann sich die Kolbenstange in Richtung der optischen Messvorrichtung bewegen, wobei diese Bewegung gestoppt wird, wenn der Sensor und/oder der Schalter die Kolbenstange detektiert. Basierend auf dieser Detektion wird die Bewegung der Kolbenstange gestoppt.

Bei einer vorteilhaften Weiterbildung der erfindungsgemäßen Lösung ist vorgesehen, dass die optische Messvorrichtung dazu ausgebildet ist, die Position der Kolbenstange, insbesondere der Stirnfläche und/oder des Reinigungselements, innerhalb des Rohrs zu ermitteln, um eine genaue Positionierung der Kolbenstange, insbesondere der Stirnfläche und/oder des Reinigungselements, zu ermöglichen. Die optische Messvorrichtung kann auf Grund des durch die Kolbenstange, insbesondere die Stirnfläche und/oder das Reinigungselement, generierten Absorptionsspektrum erkennen, ob sich die Kolbenstange, insbesondere die Stirnfläche und/oder das Reinigungselement, im Rohr befindet. Nach dieser Erkennung kann die Kolbenstange so lange aus dem Rohr herausgefahren werden, bis die Kolbenstange, insbesondere die Stirnfläche und/oder das Reinigungselement, nicht mehr im Rohr ist. Dass die Kolbenstange, insbesondere der Stirnfläche und/oder des Reinigungselements, nicht mehr im Rohr ist, erkennt die optische Messvorrichtung wieder am generierten Absorptionsspektrum und stoppt dann, insbesondere unmittelbar und/oder sofort, die Ausfahrbewegung der Kolbenstange. Aufgrund der Anordnung des Rohrs, des Zuführrohrs und des Schneckenförderers bleibt die Kolbenstange, insbesondere die Stirnfläche und/oder das Reinigungselement, im Zuführrohr stehen, sodass der Erntegut-Teilstrom nicht von dem Schneckenförderer in das Rohr strömen kann. Mit anderen Worten ausgedrückt, dichtet die Kolbenstange, insbesondere die Stirnfläche und/oder das Reinigungselement, das Rohr gegenüber dem Schneckenförderer ab.

Bei einer vorteilhaften Weiterbildung der erfindungsgemäßen Lösung ist vorgesehen, dass die optische Messvorrichtung dazu ausgebildet ist, die Position der Kolbenstange, insbesondere der Stirnfläche und/oder des Reinigungselementes, mittels wenigstens einem Absorptionsspektrum zu ermitteln. Hierdurch kann die Position der Kolbenstange, insbesondere der Stirnfläche und/oder des Reinigungselementes, innerhalb des optischen Messvorrichtung, insbesondere innerhalb des Rohrs, ermittelt werden.

Bei einer vorteilhaften Weiterbildung der erfindungsgemäßen Lösung ist vorgesehen, dass die Kolbenstange, insbesondere die Stirnfläche und/oder das Reinigungselement, wenigstens abschnittsweise eine geometrische Variation aufweist. Hierdurch ist die Kolbenstange derart gestaltet, dass einem bestimmten Zylinderhub ein bestimmtes Absorptionsverhalten zugeordnet werden kann. Eine geometrische Variation kann eine geometrische Änderung des Materials sein. Beispielsweise kann neben einem kreisförmigen Querschnitt der Kolbenstange ein dreieckiger Querschnitt der Kolbenstange ausgebildet sein.

Alternativ oder zusätzlich ist vorgesehen, dass die Kolbenstange, insbesondere die Stirnfläche und/oder das Reinigungselement, wenigstens abschnittsweise aus unterschiedlichen Materialien ausgebildet ist. Unterschiedliche Materialien weisen unterschiedliche Absorptionsverhalten auf. Dies kann außerdem zur zusätzlichen, präziseren Mehrpunktkalibrabtion des Sensors genutzt werden.

Bei einer vorteilhaften Weiterbildung der erfindungsgemäßen Lösung ist vorgesehen, dass die Bypass-Vorrichtung eine Zuführungsöffnung aufweist, durch die der Erntegut-Teilstrom aus dem Kornelevator in die Bypass-Vorrichtung einströmen kann.

Alternativ oder zusätzlich ist vorgesehen, dass die Bypass-Vorrichtung eine Ausführungsöffnung aufweist, durch die der Erntegut-Teilstrom nach dem Durchströmen der optischen Messvorrichtung in den Kornelevator einströmen kann.

Alternativ oder zusätzlich ist vorgesehen, dass die Bypass-Vorrichtung eine Zwischenöffnung aufweist, durch die der Erntegut-Teilstrom in den Kornelevator einströmen kann.

Bei einer vorteilhaften Weiterbildung der erfindungsgemäßen Lösung ist vorgesehen, dass zwischen der Zuführungsöffnung und dem Schneckenförderer ein Sammelbehälter zum Sammeln des Erntegut-Teilstroms ausgebildet ist. Der Sammelbehälter kann in Richtung des Schneckenförderers eine Verjüngung, insbesondere eine Querschnittsverjüngung, aufweisen. Durch den Sammelbehälter kann die Menge des Erntegut-Teilstroms mit reduzierten Schwankungen an Schneckenförderer und folglich mit reduzierten Schwankungen an die optische Messvorrichtung geführt werden.

Ferner betrifft die Erfindung ein Verfahren zur Reinigung und/oder zur Referenzierung der optischen Messvorrichtung des erfindungsgemäßen selbstfahrenden Mähdreschers. Die optische Messvorrichtung ermittelt, ob eine Reinigung und/oder eine Referenzierung erforderlich ist. Die optische Messvorrichtung übermittelt dem selbstfahrenden Mähdrescher, insbesondere einer Steuereinheit des Mähdreschers, datentechnisch ein Reinigungs-Signal und/oder ein Referenzierungs-Signal, wenn eine Reinigung und/oder eine Referenzierung der optischen Messvorrichtung erforderlich ist. Nach der Erfassung des Reinigungs-Signals und/oder des Referenzierungs-Signals führt der selbstfahrende Mähdrescher, insbesondere die Steuereinheit des Mähdreschers, mittels der Bypass-Vorrichtung eine Reinigung der optischen Messvorrichtung aus und/oder ermöglicht eine Referenzierung der optischen Messvorrichtung durch eine Verhinderung der Einströmung des Erntegut-Teilstroms in die optische Messvorrichtung.

Bei einer vorteilhaften Weiterbildung der erfindungsgemäßen Lösung ist vorgesehen, dass der selbstfahrende Mähdrescher nach der Erfassung des Reinigungs-Signals die Kolbenstange derart ansteuert, dass sich die Kolbenstange in die Endposition bewegt, um eine Reinigung der optischen Messvorrichtung, insbesondere des Rohrs, zu bewirken.

Alternativ oder zusätzlich ist vorgesehen, dass der selbstfahrende Mähdrescher nach der Erfassung des Referenzierungs-Signals die Kolbenstange derart ansteuert, dass sich die Kolbenstange in einer Zwischenposition positioniert, sodass der Erntegut-Teilstrom nicht in das Rohr der optischen Messvorrichtung einströmen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen

Es zeigen, jeweils schematisch,
- Fig. 1: einen selbstfahrenden Mähdrescher,
- Fig. 2: eine Frontansicht einer Bypass-Vorrichtung,
- Fig. 3: eine Rückansicht der Bypass-Vorrichtung,
- Fig. 4: eine schematische Frontansicht der Bypass-Vorrichtung, in der eine Kolbenstange sichtbar ist.

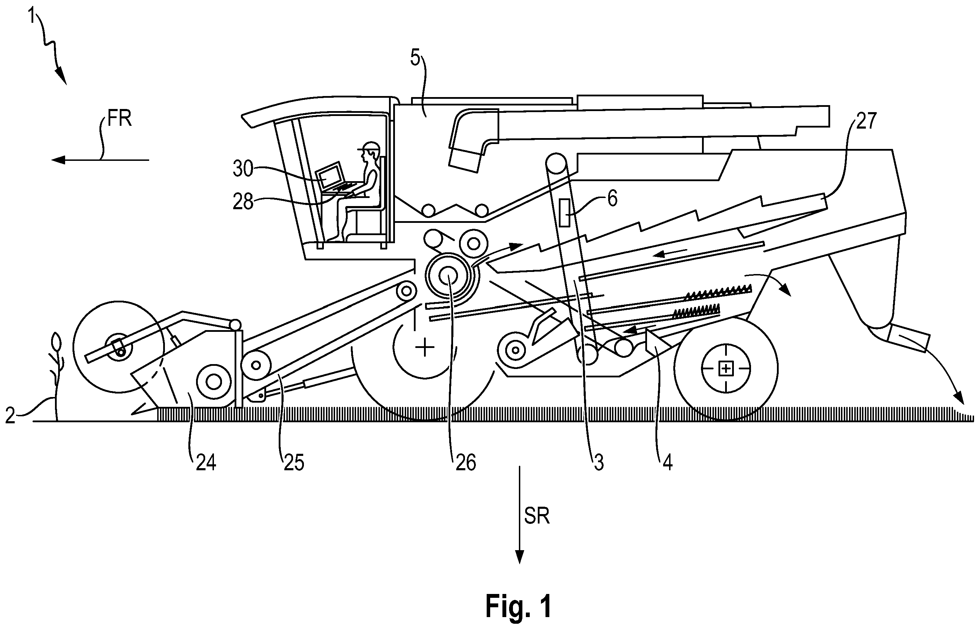

Die Fig. 1 zeigt einen selbstfahrenden Mähdrescher 1 zur Aufnahme und Behandlung von Erntegut 2. Der selbstfahrenden Mähdrescher kann eine Rechnereinheit 28 mit einem Bildschirm 30 für einen Fahrer der selbstfahrenden Mähdrescher 1 aufweisen. Im Betrieb des Mähdreschers 1 fährt der Mähdrescher 1 in eine Fahrtrichtung FR durch den Erntegutbestand 2 und nimmt dabei mit einem Schneidwerk 24 das Erntegut 2 auf. Mit einem Schrägförderer 25 wird dieses Erntegut 2 zum Dreschwerk 26 gefördert. In dem Dreschwerk 26, einer Abscheidung 27 und einer Förder- und Reinigungsvorrichtung 4 werden die Körner vom restlichen Erntegut getrennt, sodass ein Erntegutstrom entsteht.

Der Mähdrescher 1 weist einen Kornelevator 3 zur Förderung eines Erntegutstroms von der Förder- und Reinigungsvorrichtung 4 zu einem Korntank 5 des Mähdreschers 1 auf. Hierbei ist am Kornelevator 3 eine Bypass-Vorrichtung 6 derart angeordnet, dass ein Erntegut-Teilstroms des durch den Kornelevator 3 geführten Erntegutstroms in die Bypass-Vorrichtung 6 einströmt. Der Erntegut-Teilstrom strömt vom Kornelevator 3 in die Bypass-Vorrichtung 6 ein und anschließend durchströmt der Erntegut-Teilstrom die Bypass-Vorrichtung 6, wobei der Erntegut-Teilstrom nach dem Durchströmen der Bypass-Vorrichtung 6 wieder zurück in den Kornelevator 3 strömt.

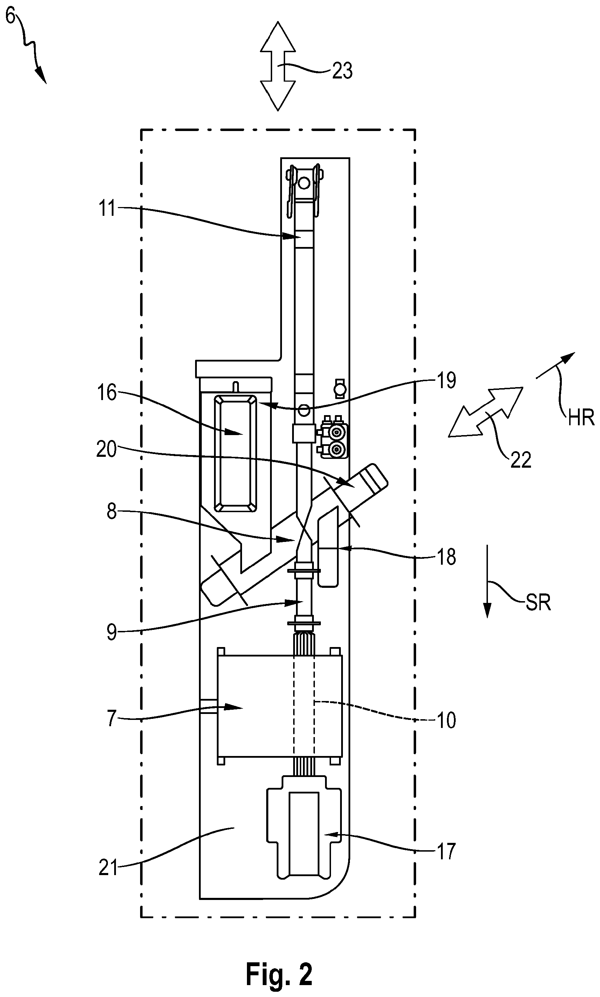

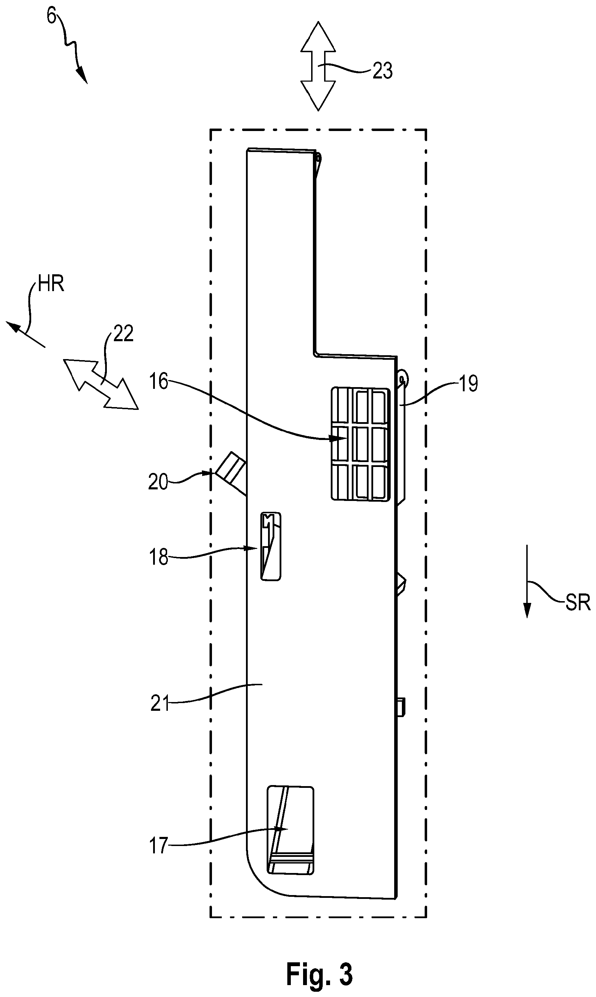

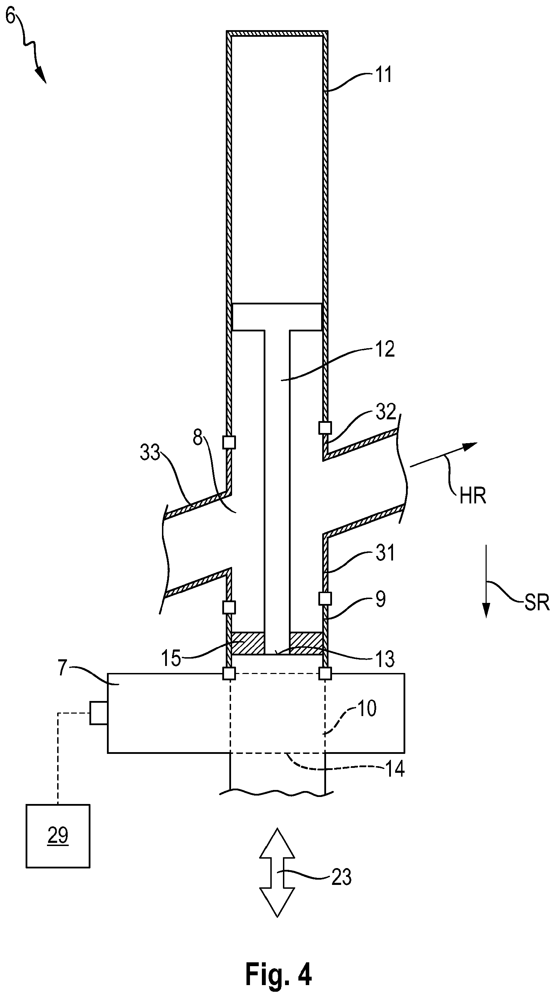

In der Fig. 2 ist eine Frontansicht einer Bypass-Vorrichtung 6 und in der Fig. 3 ist eine Rückansicht der Bypass-Vorrichtung 6 gezeigt. Die Fig. 4 zeigt eine schematische Frontansicht eines Teilbereiches der Bypass-Vorrichtung 6, wobei eine Kolbenstange 12 sichtbar dargestellt ist.

Die Bauteile der Bypass-Vorrichtung 6 können auf einer Bodenplatte 21 der Bypass-Vorrichtung 6 angeordnet und/oder fixiert sein. Die Bodenplatte 21 der Bypass-Vorrichtung 6 weist eine Zuführungsöffnung 16 auf, durch die der Erntegut-Teilstroms ausgehend von dem Kornelevator 3 in die Bypass-Vorrichtung 6 einströmt. Die Bypass-Vorrichtung 6 weist einen Schneckenförderer 8 und einen Sammelbehälter 19 auf, wobei der Sammelbehälter 19 zwischen der Zuführungsöffnung 16 und dem Schneckenförderer 8 derart ausgebildet und/oder angeordnet ist, sodass der Erntegut-Teilstrom von der Zuführungsöffnung 16 in den Sammelbehälter 19 einströmt und anschließend vom Sammelbehälter 19 in den Schneckenförderer 8 einströmt. Hierfür ist die Zuführungsöffnung 16 oberhalb eines Teiles des Schneckenförderers 8 angeordnet, sodass der Erntegut-Teilstrom aufgrund der Gravitation im Wesentlichen entlang der Schwerkraftrichtung SR strömt und über eine nicht dargestellte Einströmungsöffnung in den Schneckenförderer einströmt.

Der Schneckenförderer 8 ist zur Förderung des Erntegut-Teilstroms zu einer optischen Messvorrichtung 7 der Bypass-Vorrichtung 6 ausgebildet. Der Schneckenförderer 8 weist einen Rohrkörper 33 auf, der sich entlang der Förderrichtung 22 erstreckt. Der Schneckenförderer 8 umfasst einen Antrieb 20, der im Rohrkörper 33 drehbar gelagerte und nicht dargestellte Schneckenwindungen antreiben kann. Durch die Drehbewegung der Schneckenwindungen wird der im Schneckenförderer 8 eingetretene Erntegut-Teilstrom in Richtung der Hauptförderrichtung HR transportiert, um die optische Messvorrichtung 7 mit dem Erntegut-Teilstrom zu versorgen. Hierfür kann der Rohrkörper 33 ein erstes Querrohr 31 aufweisen, wobei der Rohrkörper 33 und das Querrohr 31 einteilig ausgebildet sein können. An dem Querrohr 31, welches eine Ausströmungsöffnung aufweist, ist ein Zuführrohr 9 zur Führung des Erntegut-Teilstroms vom Schneckenförderer 8 zur optischen Messvorrichtung 7 angeordnet. Die optische Messvorrichtung 7 umfasst ein Rohr 10 zur Führung des Erntegut-Teilstroms, sodass die Ermittlung und/oder Messung von Ernteguteigenschaften des Erntegut-Teilstromes durchgeführt werden kann.

Mit der optischen Messvorrichtung 7 können beispielsweise die Wassermasse, die Proteinmasse, die Kohlenhydratmasse und/oder die Fettmasse und/oder die Ölmasse des Erntegut- Teilstromes ermittelt werden. Hierfür weist die optische Messvorrichtung 7 eine nicht dargestellte Lichtquelle auf, die den Erntegut-Teilstrom beim Durchströmen der Messvorrichtung 7 belichtet. Die optische Messvorrichtung 7 erfasst mit einem nicht dargestellten Sensor massenproportionale Absorptionsspektren und ermittelt anhand dieser Messdaten die Wassermasse, die Proteinmasse, die Kohlenhydratmasse und/oder die Fettmasse und/oder die Ölmasse des Erntegut-Teilstromes.

Die Bypass-Vorrichtung 6 ist zur Reinigung des Rohres 10 der optischen Messvorrichtung 7 und zur Sicherstellung eines Leerzustandes des Rohres 10 der optischen Messvorrichtung 7 ausgebildet, wobei die Bypass-Vorrichtung 6 hierfür eine einzige Zylindervorrichtung 11 mit einer beweglichen Kolbenstange 12 zur Reinigung des Rohres 10 der optischen Messvorrichtung 7 und zur Sicherstellung eines Leerzustandes des Rohres 10 der optischen Messvorrichtung 7 aufweist. Die Kolbenstange 12 kann entlang der Bewegungsrichtung 23 bewegt werden. In diesem Ausführungsbeispiel ist die Bewegungsrichtung 23 der Kolbenstange 12 nicht rechtwinkelig zur Förderrichtung 22 des Schneckenförderers ausgerichtet, sodass die Kolbenstange 12 wenigstens teilweise durch den Rohrkörper 33 geführt werden kann und/oder wenigstens teilweise im Rohrkörper 33 positioniert werden kann. Hierfür kann der Rohrkörper 33 ein zweites Querrohr 32 aufweisen. Der Rohrkörper 33 und das zweite Querrohr 32 können einteilig ausgebildet sein können. Das erste Querrohr 31 und das zweite Querrohr 32 können am Rohrkörper 33 derart positioniert sein, dass die Kolbenstange 12 sich vom ersten Querrohr 31 zum zweiten Querrohr 32 oder umgekehrt bewegen kann. Hierbei kann es vorgesehen sein, dass der Schneckenförderer 8 die Förderung stoppt und die Lage der nicht dargestellten Schneckenwindungen derart ausgerichtet wird, dass die Kolbenstange 12 reibungsfrei zwischen den Schneckenwindungen des Schneckenförderers 8 bewegt werden kann.

Die Kolbenstange 12, insbesondere eine Stirnfläche 13 der Kolbenstange 12, kann wenigstens eine Öffnungsposition einnehmen, in der der Schneckenförderer 8, das Zuführrohr 9 und das Rohr 10 derart zur Führung des Erntegut-Teilstroms miteinander verbunden sind, dass ein vom Schneckenförderer 8 geförderter Erntegut-Teilstrom im Wesentlichen in das Zuführrohr 9 einströmt und anschließend das Rohr 10 durchströmt.

Der Schneckenförderer 8 kann eine Zwischenöffnung 18 aufweisen, die bezüglich der Hauptförderrichtung HR stromab der Ausströmungsöffnung ausgebildet ist, wobei über diese Zwischenöffnung 18 ein Teil des Erntegut-Teilstroms, der nicht in die Ausströmungsöffnung eingeströmt ist, zurück in den Kornelevator 3 strömen kann.

Die Kolbenstange 12, insbesondere die Stirnfläche 13 der Kolbenstange 12, kann wenigstens eine Zwischenposition einnehmen, in der wenigstens ein Teil der Kolbenstange 12 unterdrückt, dass der Erntegut-Teilstrom von dem Schneckenförderer 8 zum Rohr 10 strömen kann, sodass ein vom Schneckenförderer 8 ausgehender Erntegut-Teilstrom nicht in das Rohr 10 der optischen Messvorrichtung 7 einströmt. Diese Situation ist in der Fig. 4 dargestellt. Hierfür weist die Kolbenstange 12 beispielsweise ein Reinigungselement 15, insbesondere ein bürstenartiges Reinigungselement 15, auf.

Die Kolbenstange 12, insbesondere die Stirnfläche 13 der Kolbenstange 12, kann wenigstens eine Endposition einnehmen, in der wenigstens ein Teil der Kolbenstange 12 in einer Endöffnung 14 des Rohres 10 der optischen Messvorrichtung 7 angeordnet ist. Die Bypass-Vorrichtung 6 umfasst eine Ausführungsöffnung 17, durch die der Erntegut-Teilstrom nach dem Durchströmen der optischen Messvorrichtung 7 in den Kornelevator 3 einströmen kann.

Wie in der Fig. 3 dargestellt, können die Zuführungsöffnung 16, die Ausführungsöffnung 17 und die Zwischenöffnung 18 jeweils Öffnung und/oder Bohrung in der Bodenplatte 21 ausbilden und/oder umfassen.

Die optische Messvorrichtung 7 ermittelt, ob eine Reinigung und/oder eine Referenzierung erforderlich ist. Die optische Messvorrichtung 7 übermittelt dem selbstfahrenden Mähdrescher 1, insbesondere einer Steuereinheit 29 des Mähdreschers 1, datentechnisch ein Reinigungs-Signal und/oder ein Referenzierungs-Signal, wenn eine Reinigung und/oder eine Referenzierung der optischen Messvorrichtung 7 erforderlich ist. Nach der Erfassung des Reinigungs-Signals und/oder des Referenzierungs-Signals führt der selbstfahrende Mähdrescher 1, insbesondere die Steuereinheit 29 des Mähdreschers 1, mittels der Bypass-Vorrichtung 6 eine Reinigung der optischen Messvorrichtung 7 aus und/oder ermöglicht eine Referenzierung der optischen Messvorrichtung 7 durch eine Verhinderung der Einströmung des Erntegut-Teilstroms in die optische Messvorrichtung 7.

Wenn die optische Messvorrichtung 7 ein Reinigungs-Signal übermittelt, wird die die Kolbenstange 12 in die Endposition bewegt, um eine Reinigung der optischen Messvorrichtung 7, insbesondere des Rohrs 10, zu bewirken.

Wenn die optische Messvorrichtung 7 ein Referenzierungs-Signal übermittelt, wird die Kolbenstange 12 derart angesteuert, dass sich die Kolbenstange 12 in einer Zwischenposition positioniert, sodass der Erntegut-Teilstrom nicht in das Rohr 10 der optischen Messvorrichtung 7 einströmen kann. Dieser Zustand ist in der Fig. 4 dargestellt.

Wenn die optische Messvorrichtung 7 kein Reinigungs-Signal und kein Referenzierungs-Signal übermittelt, wird die Kolbenstange 12 derart angesteuert, dass sich die Kolbenstange 12 in einer Öffnungsposition positioniert, sodass ein vom Schneckenförderer 8 geförderter Erntegut-Teilstrom im Wesentlichen in das Zuführrohr 9 einströmen kann und anschließend das Rohr 10 durchströmt. Hierbei kann vorgesehen sein, dass der Schneckenförderer 8 mit der Förderung des Erntegut-Teilstroms beginnt, wenn die die Kolbenstange 12 eine Öffnungsposition eingenommen hat.

### Bezugszeichenliste

- 1: Mähdrescher
- 2: Erntegut
- 3: Kornelevator
- 4: Förder- und Reinigungsvorrichtung
- 5: Korntank
- 6: Bypass-Vorrichtung
- 7: optische Messvorrichtung
- 8: Schneckenförderer
- 9: Zuführrohr
- 10: Rohr
- 11: Zylindervorrichtung
- 12: Kolbenstange
- 13: Stirnfläche
- 14: Endöffnung
- 15: Reinigungselement
- 16: Zuführungsöffnung
- 17: Ausführungsöffnung
- 18: Zwischenöffnung
- 19: Sammelbehälter
- 20: Antrieb
- 21: Bodenplatte
- 22: Förderrichtung
- 23: Bewegungsrichtung
- 24: Schneidwerk
- 25: Schrägförderer
- 26: Dreschwerk
- 27: Abscheidung
- 28: Recheneinheit
- 29: Steuereinheit
- 30: Bildschirm
- 31: erstes Querrohr
- 32: zweites Querrohr
- 33: Rohrkörper

- FR: Fahrtrichtung
- SR: Schwerkraftrichtung
- HR: Hauptförderrichtung

## Patentansprüche

1. Selbstfahrender Mähdrescher (1) zur Aufnahme und Behandlung von Erntegut (2),
- mit einem Kornelevator (3) zur Förderung eines Erntegutstroms von einer Förder- und Reinigungsvorrichtung (4) des Mähdreschers (1) zu einem Korntank (5) des Mähdreschers (1),
- mit einer am Kornelevator (3) angeordneten Bypass-Vorrichtung (6) zur Führung eines Erntegut-Teilstroms des durch den Kornelevator (3) geführten Erntegutstroms, wobei
die Bypass-Vorrichtung (6) eine optische Messvorrichtung (7) zur Ermittlung von Ernteguteigenschaften, insbesondere zur Ermittlung von Inhaltsstoffen, des Erntegut-Teilstromes aufweist, wobei die Bypass-Vorrichtung (6) ein Zuführrohr (9) zur Führung des Erntegut-Teilstroms vom Schneckenförderer (8) zur optischen Messvorrichtung (7) aufweist und die optische Messvorrichtung (7) ein Rohr (10) zur Führung des Teilstroms des Erntegutstroms für die Ermittlung von Ernteguteigenschaften des Erntegut-Teilstromes aufweist und die Bypass-Vorrichtung (6) einen Schneckenförderer (8) zur Förderung des Erntegut-Teilstroms zur optischen Messvorrichtung (7) aufweist, **dadurch gekennzeichnet, dass** die Bypass-Vorrichtung (6) zur Reinigung des Rohres (10) der optischen Messvorrichtung (7) und zur Sicherstellung eines Leerzustandes des Rohres (10) der optischen Messvorrichtung (7) ausgebildet ist, indem die Bypass-Vorrichtung (6) eine Zylindervorrichtung (11) mit einer beweglichen Kolbenstange (12) zur Reinigung des Rohres (10) der optischen Messvorrichtung (7) und zur Sicherstellung eines Leerzustandes des Rohres (10) der optischen Messvorrichtung (7) aufweist.

2. Selbstfahrender Mähdrescher (1) nach Anspruch 1,
**dadurch gekennzeichnet,**
- **dass** die Kolbenstange (12), insbesondere eine Stirnfläche (13) der Kolbenstange (12), wenigstens eine Öffnungsposition einnehmen kann, in der der Schneckenförderer (8), das Zuführrohr (9) und das Rohr (10) derart zur Führung des Erntegut-Teilstroms miteinander verbunden sind, dass ein vom Schneckenförderer (8) geförderter Erntegut-Teilstrom im Wesentlichen in das Zuführrohr (9) einströmt und anschließend das Rohr (10) durchströmt, und/oder
- **dass** die Kolbenstange (12), insbesondere die Stirnfläche (13) der Kolbenstange (12), wenigstens eine Zwischenposition einnehmen kann, in der wenigstens ein Teil der Kolbenstange unterdrückt, dass der Erntegut-Teilstrom von dem Schneckenförderer (8) zum Rohr (10) strömen kann, sodass ein vom Schneckenförderer (8) ausgehender Erntegut-Teilstrom nicht in das Rohr (10) der optischen Messvorrichtung (7) einströmt, und/oder
- **dass** die Kolbenstange (12), insbesondere die Stirnfläche (13) der Kolbenstange (12), wenigstens eine Endposition einnehmen kann, in der wenigstens ein Teil der Kolbenstange (12) in einer Endöffnung (14) des Rohres (10) der optischen Messvorrichtung (7) angeordnet ist.

3. Selbstfahrender Mähdrescher (1) nach Anspruch 2,
**dadurch gekennzeichnet,**
**dass** die Kolbenstange (12) ein Reinigungselement (15), insbesondere ein bürstenartiges Reinigungselement (15), aufweist.

4. Selbstfahrender Mähdrescher (1) nach einem der Ansprüche 2 und 3,
**dadurch gekennzeichnet,**
- **dass** die Bypass-Vorrichtung (6) eine Wegmessvorrichtung zur Ermittlung der Position der Kolbenstange (12), insbesondere der Stirnfläche (13) und/oder des Reinigungselementes (15), aufweist, um eine genaue Positionierung der Kolbenstange (12), insbesondere der Stirnfläche (13) und/oder des Reinigungselementes (15), zu ermöglichen, und/oder
- **dass** die Bypass-Vorrichtung (6) eine Vorrichtung zur zeitgesteuerten Positionsänderung der Kolbenstange (12), insbesondere der Stirnfläche (13) und/oder des Reinigungselementes (15), aufweist, um eine genaue Positionierung der Kolbenstange (12), insbesondere der Stirnfläche (13) und/oder des Reinigungselementes (15), zu ermöglichen, und/oder
- **dass** die Bypass-Vorrichtung (6) im Zuführrohr (9) einen Sensor und/oder einen Schalter zur Erfassung des Vorhandenseins der Kolbenstange (12), insbesondere der Stirnfläche (13) und/oder des Reinigungselementes (15), aufweist, um eine genaue Positionierung der Kolbenstange (12), insbesondere der Stirnfläche (13) und/oder des Reinigungselementes (15), zu ermöglichen.

5. Selbstfahrender Mähdrescher (1) nach einem der Ansprüche 2 bis 4,
**dadurch gekennzeichnet,**
**dass** die optische Messvorrichtung (7) dazu ausgebildet ist, die Position der Kolbenstange (12), insbesondere der Stirnfläche (13) und/oder des Reinigungselementes (15), innerhalb des Rohrs (10) zu ermitteln, um eine genaue Positionierung der Kolbenstange (12), insbesondere der Stirnfläche (13) und/oder des Reinigungselementes (15), zu ermöglichen.

6. Selbstfahrender Mähdrescher (1) nach Anspruch 5,
**dadurch gekennzeichnet,**
**dass** die optische Messvorrichtung (7) dazu ausgebildet ist, die Position der Kolbenstange (12), insbesondere der Stirnfläche (13) und/oder des Reinigungselementes (15), mittels wenigstens einem Absorptionsspektrum zu ermitteln.

7. Selbstfahrender Mähdrescher (1) nach Anspruch 5 oder 6,
**dadurch gekennzeichnet,**
- **dass** die Kolbenstange (12), insbesondere die Stirnfläche (13) und/oder das Reinigungselement (15), wenigstens abschnittsweise eine geometrische Variation aufweist, und/oder
- **dass** die Kolbenstange (12), insbesondere die Stirnfläche (13) und/oder das Reinigungselement (15), wenigstens abschnittsweise aus unterschiedlichen Materialien ausgebildet ist.

8. Selbstfahrender Mähdrescher (1) nach einem der vorangehenden Ansprüche,
**dadurch gekennzeichnet,**
- **dass** die Bypass-Vorrichtung (6) eine Zuführungsöffnung (16) aufweist, durch die der Erntegut-Teilstrom aus dem Kornelevator (3) in die Bypass-Vorrichtung (6) einströmen kann, und/oder
- **dass** die Bypass-Vorrichtung (6) eine Ausführungsöffnung (17) aufweist, durch die der Erntegut-Teilstrom nach dem Durchströmen der optischen Messvorrichtung (7) in den Kornelevator (3) einströmen kann, und/oder
- **dass** die Bypass-Vorrichtung (6) eine Zwischenöffnung (18) aufweist, durch die der Erntegut-Teilstrom in den Kornelevator (3) einströmen kann.

9. Selbstfahrender Mähdrescher (1) nach Anspruch 8,
**dadurch gekennzeichnet,**
**dass** zwischen der Zuführungsöffnung (16) und dem Schneckenförderer (8) ein Sammelbehälter (19) zum Sammeln des Erntegut-Teilstroms ausgebildet ist.

10. Verfahren zur Reinigung und/oder zur Referenzierung der optischen Messvorrichtung (7) des selbstfahrenden Mähdreschers (1) nach einem der Ansprüche 3-9 **dadurch gekennzeichnet,**
- **dass** die optische Messvorrichtung (7) ermittelt, ob eine Reinigung und/oder eine Referenzierung erforderlich ist,
- wobei die optischen Messvorrichtung (7) dem selbstfahrenden Mähdreschers (1) datentechnisch ein Reinigungs-Signal und/oder ein Referenzierung-Signal übermittelt, wenn eine Reinigung und/oder eine Referenzierung der optischen Messvorrichtung (7) erforderlich ist,
- wobei der selbstfahrende Mähdreschers (1) nach der Erfassung des Reinigungs-Signals und/oder des Referenzierung-Signals, mittels der Bypass-Vorrichtung (6) eine Reinigung der optischen Messvorrichtung (7) ausführt und/oder eine Referenzierung der optischen Messvorrichtung (7) durch eine Verhinderung der Einströmung des Erntegut-Teilstroms in die optische Messvorrichtung (7) ermöglicht.

## Claims

1. Self-propelled combine harvester (1) for picking up and treating harvested crops (2),
- having a grain elevator (3) for conveying a harvested crop stream from a conveying and cleaning device (4) of the combine harvester (1) to a grain tank (5) of the combine harvester (1),
- having a bypass device (6), which is arranged on the grain elevator (3), for guiding a partial harvested crop stream of the harvested crop stream guided through the grain elevator (3),
wherein the bypass device (6) has an optical measuring device (7) for determining harvested crop properties, in particular for determining ingredients, of the partial harvested crop stream, wherein the bypass device (6) has a feed tube (9) for guiding the partial harvested crop stream from the auger conveyor (8) to the optical measuring device (7) and the optical measuring device (7) has a tube (10) for guiding the partial stream of the harvested crop stream for determining the harvested crop properties of the partial harvested crop stream and the bypass device (6) has an auger conveyor (8) for conveying the partial harvested crop stream to the optical measuring device (7), **characterized in that**
the bypass device (6) is designed for cleaning the tube (10) of the optical measuring device (7) and for ensuring an empty state of the tube (10) of the optical measuring device (7) by way of the bypass device (6) comprising a cylinder device (11) with a movable piston rod (12) for cleaning the tube (10) of the optical measuring device (7) and for ensuring an empty state of the tube (10) of the optical measuring device (7).

2. Self-propelled combine harvester (1) according to Claim 1,
**characterized**
- **in that** the piston rod (12), in particular an end face (13) of the piston rod (12), can occupy at least an opening position, in which the auger conveyor (8), the feed tube (9) and the tube (10) are connected to each other for guiding the partial harvested crop stream in such a way that a partial harvested crop stream conveyed from the auger conveyor (8) flows substantially into the feed tube (9) and then flows through the tube (10), and/or
- **in that** the piston rod (12), in particular the end face (13) of the piston rod (12), can occupy at least an intermediate position, in which at least a portion of the piston rod prevents the partial harvested crop stream from being able to flow from the auger conveyor (8) to the tube (10), so that a partial harvested crop stream emerging from the auger conveyor (8) does not flow into the tube (10) of the optical measuring device (7), and/or
- **in that** the piston rod (12), in particular the end face (13) of the piston rod (12), can occupy at least an end position in which at least a portion of the piston rod (12) is arranged in an end opening (14) of the tube (10) of the optical measuring device (7).

3. Self-propelled combine harvester (1) according to Claim 2,
**characterized**
**in that** the piston rod (12) has a cleaning element (15), in particular a brush-like cleaning element (15).

4. Self-propelled combine harvester (1) according to either of Claims 2 and 3,
**characterized**
- **in that** the bypass device (6) has a distance measuring device for determining the position of the piston rod (12), in particular the end face (13) and/or the cleaning element (15), in order to allow exact positioning of the piston rod (12), in particular the end face (13) and/or the cleaning element (15), and/or
- **in that** the bypass device (6) has a device for changing the position of the piston rod (12), in particular the end face (13) and/or the cleaning element (15), in a time-controlled manner in order to allow exact positioning of the piston rod (12), in particular the end face (13) and/or the cleaning element (15), and/or
- **in that** the bypass device (6) has, in the feed tube (9), a sensor and/or a switch for detecting the presence of the piston rod (12), in particular the end face (13) and/or the cleaning element (15), in order to allow exact positioning of the piston rod (12), in particular the end face (13) and/or the cleaning element (15).

5. Self-propelled combine harvester (1) according to any of Claims 2 to 4,
**characterized**
**in that** the optical measuring device (7) is designed to determine the position of the piston rod (12), in particular the end face (13) and/or the cleaning element (15), within the tube (10), in order to allow exact positioning of the piston rod (12), in particular the end face (13) and/or the cleaning element (15).

6. Self-propelled combine harvester (1) according to Claim 5,
**characterized**
**in that** the optical measuring device (7) is designed to determine the position of the piston rod (12), in particular the end face (13) and/or the cleaning element (15), by means of at least one absorption spectrum.

7. Self-propelled combine harvester (1) according to Claim 5 or 6,
**characterized**
- **in that** the piston rod (12), in particular the end face (13) and/or the cleaning element (15), has a geometric variation at least in sections, and/or
- **in that** the piston rod (12), in particular the end face (13) and/or the cleaning element (15), is formed from different materials at least in sections.

8. Self-propelled combine harvester (1) according to one of the preceding claims,
**characterized**
- **in that** the bypass device (6) has a feed opening (16) through which the partial harvested crop stream from the grain elevator (3) can flow into the bypass device (6), and/or
- **in that** the bypass device (6) has a discharge opening (17) through which the partial harvested crop stream can flow into the grain elevator (3) after flowing through the optical measuring device (7), and/or
- **in that** the bypass device (6) has an intermediate opening (18) through which the partial harvested crop stream can flow into the grain elevator (3).

9. Self-propelled combine harvester (1) according to Claim 8,
**characterized**
**in that** a collection container (19) for collecting the partial harvested crop stream is formed between the feed opening (16) and the auger conveyor (8).

10. Method for cleaning and/or for referencing the optical measuring device (7) of the self-propelled combine harvester (1) according to one of Claims 3-9, **characterized**
- **in that** the optical measuring device (7) determines whether cleaning and/or referencing is required,
- wherein the optical measuring device (7) transmits a cleaning signal and/or a referencing signal to the self-propelled combine harvester (1) by data processing means when cleaning and/or referencing of the optical measuring device (7) is required,
- wherein the self-propelled combine harvester (1), after detecting the cleaning signal and/or the referencing signal, performs cleaning of the optical measuring device (7) by means of the bypass device (6) and/or referencing of the optical measuring device (7) by preventing the partial harvested crop stream from flowing into the optical measuring device (7).

## Revendications

1. Moissonneuse-batteuse automotrice (1) destinée à recevoir et à traiter des produits de récolte (2),
- avec un élévateur de grains (3) destiné à transporter un flux de produit de récolte d'un dispositif de transport et de nettoyage (4) de la moissonneuse-batteuse (1) à une trémie à grains (5) de la moissonneuse-batteuse (1),
- avec un dispositif de dérivation (6) disposé sur l'élévateur de grains (3) pour guider un flux partiel de produit de récolte du flux de produit de récolte guidé à travers l'élévateur de grains (3),
le dispositif de dérivation (6) comportant un dispositif de mesure optique (7) destiné à déterminer des propriétés de produit de récolte, en particulier destiné à déterminer des ingrédients du flux partiel de produit de récolte, le dispositif de dérivation (6) comportant un tuyau d'amenée (9) pour guider le flux partiel de produit de récolte du convoyeur à vis sans fin (8) au dispositif de mesure optique (7), et le dispositif de mesure optique (7) comportant un tuyau (10) destiné à guider le flux partiel de produit de récolte pour la détermination de propriétés de produit de récolte du flux partiel de produit de récolte, et le dispositif de dérivation (6) comportant un convoyeur à vis sans fin (8) pour le transport du flux partiel de produit de récolte au dispositif de mesure optique (7), **caractérisée en ce que** le dispositif de dérivation (6) est formé pour nettoyer le tuyau (10) du dispositif de mesure optique (7) et pour garantir que le tuyau (10) du dispositif de mesure optique (7) se trouve à l'état vide, **en ce que** le dispositif de dérivation (6) comporte un dispositif de cylindre (11) avec une tige de piston (12) mobile pour nettoyer le tuyau (10) du dispositif de mesure optique (7) et pour garantir que le tuyau (10) du dispositif de mesure optique (7) se trouve à l'état vide.

2. Moissonneuse-batteuse automotrice (1) selon la revendication 1,
**caractérisée en ce**
- **que** la tige de piston (12), en particulier une face frontale (13) de la tige de piston (12), peut prendre au moins une position d'ouverture, dans laquelle le convoyeur à vis sans fin (8), le tuyau d'amenée (9) et le tuyau (10) sont reliés entre eux de manière à guider le flux partiel de produit de récolte de telle manière qu'un flux partiel de produit de récolte transporté par le convoyeur à vis sans fin (8) afflue sensiblement dans le tuyau d'amenée (9) puis traverse le tuyau (10), et/ou
- **que** la tige de piston (12), en particulier la face frontale (13) de la tige de piston (12), peut prendre au moins une position intermédiaire, dans laquelle au moins une partie de la tige de piston empêche l'écoulement du flux partiel de produit de récolte du convoyeur à vis sans fin (8) vers le tuyau (10), si bien qu'un flux partiel de produit de récolte provenant du convoyeur à vis sans fin (8) n'afflue pas dans le tuyau (10) du dispositif de mesure optique (7), et/ou
- **que** la tige de piston (12), en particulier la face frontale (13) de la tige de piston (12), peut prendre au moins une position terminale, dans laquelle au moins une partie de la tige de piston (12) est disposée dans une ouverture terminale (14) du tuyau (10) du dispositif de mesure optique (7).

3. Moissonneuse-batteuse automotrice (1) selon la revendication 2,
**caractérisée en ce**
**que** la tige de piston (12) comporte un élément de nettoyage (15), en particulier un élément de nettoyage (15) en forme de brosse.

4. Moissonneuse-batteuse automotrice (1) selon l'une des revendications 2 et 3,
**caractérisée en ce**
- **que** le dispositif de dérivation (6) comporte un dispositif de mesure de déplacement pour déterminer la position de la tige de piston (12), en particulier de la face frontale (13) et/ou de l'élément de nettoyage (15) pour permettre un positionnement précis de la tige de piston (12), en particulier de la face frontale (13) et/ou de l'élément de nettoyage (15), et/ou
- **que** le dispositif de dérivation (6) comporte un dispositif pour le changement de position commandé dans le temps de la tige de piston (12), en particulier de la face frontale (13) et/ou de l'élément de nettoyage (15) pour permettre un positionnement précis de la tige de piston (12), en particulier de la face frontale (13) et/ou de l'élément de nettoyage (15), et/ou
- **que** le dispositif de dérivation (6) comporte dans le tuyau d'amenée (9) un capteur et/ou un commutateur pour détecter la présence de la tige de piston (12), en particulier de la face frontale (13) et/ou de l'élément de nettoyage (15) pour permettre un positionnement précis de la tige de piston (12), en particulier de la face frontale (13) et/ou de l'élément de nettoyage (15).

5. Moissonneuse-batteuse automotrice (1) selon l'une des revendications 2 à 4,
**caractérisée en ce**
**que** le dispositif de mesure optique (7) est formé pour déterminer la position de la tige de piston (10), en particulier de la face frontale (13) et/ou de l'élément de nettoyage (15), à l'intérieur du tuyau (12) pour permettre un positionnement précis de la tige de piston (12), en particulier de la face frontale (13) et/ou de l'élément de nettoyage (15).

6. Moissonneuse-batteuse automotrice (1) selon la revendication 5,
**caractérisée en ce**
**que** le dispositif de mesure optique (7) est formé pour déterminer la position de la tige de piston (12), en particulier de la face frontale (13) et/ou de l'élément de nettoyage (15), au moyen d'au moins un spectre d'absorption.

7. Moissonneuse-batteuse automotrice (1) selon la revendication 5 ou 6,
**caractérisée en ce**
- **que** la tige de piston (12), en particulier la face frontale (13) et/ou l'élément de nettoyage (15), présente une variation géométrique au moins par sections, et/ou
- **que** la tige de piston (12), en particulier la face frontale (13) et/ou l'élément de nettoyage (15), sont formés au moins par sections à partir de différents matériaux.

8. Moissonneuse-batteuse automotrice (1) selon l'une des revendications précédentes,
**caractérisée en ce**
- **que** le dispositif de dérivation (6) comporte une ouverture d'amenée (16) par laquelle le flux partiel de produit de récolte provenant de l'élévateur de grains (3) peut affluer dans le dispositif de dérivation (6), et/ou
- **que** le dispositif de dérivation (6) comporte une ouverture de sortie (17), par laquelle le flux partiel de produit de récolte peut affluer dans l'élévateur de grains (3) après avoir traversé le dispositif de mesure optique (7), et/ou
- **que** le dispositif de dérivation (6) comporte une ouverture intermédiaire (18), par laquelle le flux partiel de produit de récolte peut affluer dans l'élévateur de grains (3).

9. Moissonneuse-batteuse automotrice (1) selon la revendication 8,
**caractérisée en ce**
**qu'**un récipient collecteur (19) destiné à collecter le flux partiel de produit récolte est formé entre l'ouverture d'amenée (16) et le convoyeur à vis sans fin (8).

10. Procédé de nettoyage et/ou de référencement du dispositif de mesure optique (7) de la moissonneuse-batteuse automotrice (1) selon l'une des revendications 3 à 9,
**caractérisé en ce**
- **que** le dispositif de mesure optique (7) détermine si un nettoyage et/ou un référencement sont nécessaires,
- le dispositif de mesure optique (7) transmettant un signal de nettoyage et/ou un signal de référence à la moissonneuse-batteuse automotrice (1) par une technologie de données lorsqu'un nettoyage et/ou un référencement du dispositif de mesure optique (7) sont requis,
- la moissonneuse-batteuse automotrice (1) exécutant, après la détection du signal de nettoyage et/ou du signal de référencement, un nettoyage du dispositif de mesure optique (7) au moyen du dispositif de dérivation (6) et/ou permettant un référencement du dispositif de mesure optique (7) en empêchant l'entrée du flux partiel de produit récolte dans le dispositif de mesure optique (7).
